**Europäisches Patentamt**

**European Patent Office**

**Office européen des brevets**

(11) Veröffentlichungsnummer: **0 205 408**
**A1**

(12) **EUROPÄISCHE PATENTANMELDUNG**

(21) Anmeldenummer: **86810259.1**

(22) Anmeldetag: **10.06.86**

(51) Int. Cl.⁴: **B 65 B 11/50**
**B 65 D 75/36**

(30) Priorität: **13.06.85 CH 2511/85**

(43) Veröffentlichungstag der Anmeldung:
**17.12.86 Patentblatt 86/51**

(84) Benannte Vertragsstaaten:
**AT BE DE FR GB IT LU NL SE**

(71) Anmelder: **Mosheer, Hans-Peter**
**Südhalde 19 Ennetaach**
**CH-8586 Riedt bei Erlen(CH)**

(72) Erfinder: **Mosheer, Hans-Peter**
**Südhalde 19 Ennetaach**
**CH-8586 Riedt bei Erlen(CH)**

(54) **Verfahren zum Verkleben einer Blisterverpackung.**

(57) Zur Verklebung der Verpackung wird zuerst ein Kleber auf eine der beiden Verpackungskomponenten (A,B) aufgetragen, letztere zueinander ausgerichtet und verbunden, und dann wird mittels ultravioletter Strahlung D der Kleber ausgehärtet.

*Fig. 1.*

## Verfahren zum Verkleben einer Blisterverpackung

Die Erfindung betrifft ein Verfahren nach dem Oberbegriff des Patentanspruchs.

Bekanntlich werden zum heutigen Zeitpunkt transparente Blisterverpackungen mittels Wärme auf Karton aufgeschweisst. Dies bedingt, dass der Karton mit einer zum Verschweissen geeigneten Oberfläche laminiert ist. Der Wärmeübergang erfolgt in beheizten Formen durch den Karton hindurch. Dieses Verfahren benötigt ca. 2 bis 7 Sec. Reaktionszeit, je nach Wärmeleitwert des Kartons. Die Formen, die relativ genau auf die zu bearbeitende Verpackung abgestimmt sein müssen, sind in den Anschaffungskosten nicht unbedeutend.
Durch die Vernichtung von PVC (Poly Vinil Chlorid) entstehen bekannterweise gefährliche Verbindungen. Die Industrie ist demzufolge bestrebt diesen Stoff durch einen neutralen, z.B. Polystirol (PS) zu ersetzen. Polystyrol lässt sich jedoch nur unter grösserem technischen Aufwand schweissen.

Das erfindungsgemässe Verfahren hat gegenüber dem Konventionellen folgende Vorteile:
Wesentlich kürzere Reaktionszeit (bis 7mal schneller), sehr günstige Werkzeuge, niedriger Energieverbrauch.
Eine Beschichtung des Kartons ist nicht norwendig. Unterschiedliche Medien (z.B. Karton, Alu, Kunststoffe auf transparente Kunststoffe etc.) können miteinander verklebt werden. Nebst der günstigen Anschaffung eignet sich das Verfahren für manuelle wie auch vollautomatische Verarbeitung. Ganz nebenbei wird sowohl das zu verpackende Gut als auch die Verpackung selbst durch die UV-Strahlung sterilisiert.

2

Die Aufgabe wird durch die im Patentanspruch aufgeführten Merkmale gelöst.

Das Verfahren gliedert sich in drei Abläufe, wobei sie sowohl manuell wie auch vollautomatisch realisiert werden können.

Als erster Schritt erfolgt das Auftragen des Klebers, wobei wahlweise der Blister oder die andere Verpackungskomponente Kleber erhält. Das zu verpackende Medium kann zu diesem Zeitpunkt bereits in der noch offenen Verpackung sein.

In der zweiten Phase werden die zwei, bei Doppelklebung auch deren drei Verpackungskomponenten zueinandergefügt und können etwas angedrückt werden. Durch die Kapillarwirkung des Klebers kann sofort ein feiner breiter Film von einigen $\mu$m entstehen. Anschliessend werden von einer Ultraviolett-Quelle Photonen emittiert die durch den Blister gehen und auf den Kleber treffen, dessen Photoinitiatoren angeregt werden können, wobei sie zerfallen und die Polymerisation (Vernetzung der Moleküle, allg. Härtung) auslösen. Es können dabei kaum Spaltprodukte entstehen. Vorzugsweise beträgt der Aktivierungsprozess bei nicht modifiziertem Kleber unter einer Sekunde, wobei noch Möglichkeiten der schnelleren Reaktion möglich sind. Um dieses Verfahren auch bei Tages- resp. Kunstlicht durchführen zu können reagiert der Kleber nur in bestimmten Wellenbereichen des nahen UV-Spektrums. Die Strahler sind speziell auf die Wellenlänge des Klebers abgestimmt. Nach der Aktivierung ist der Prozess abgeschlossen.

Mehrfachwerkzeuge erlauben den Verschluss von mehreren Verpackungseinheiten pro Sekunde.

Die Erfindung soll nun anhand des in der Zeichnung dargestellten
Ausführungsbeispiels erläutert werden. In der Zeichnung zeigen die

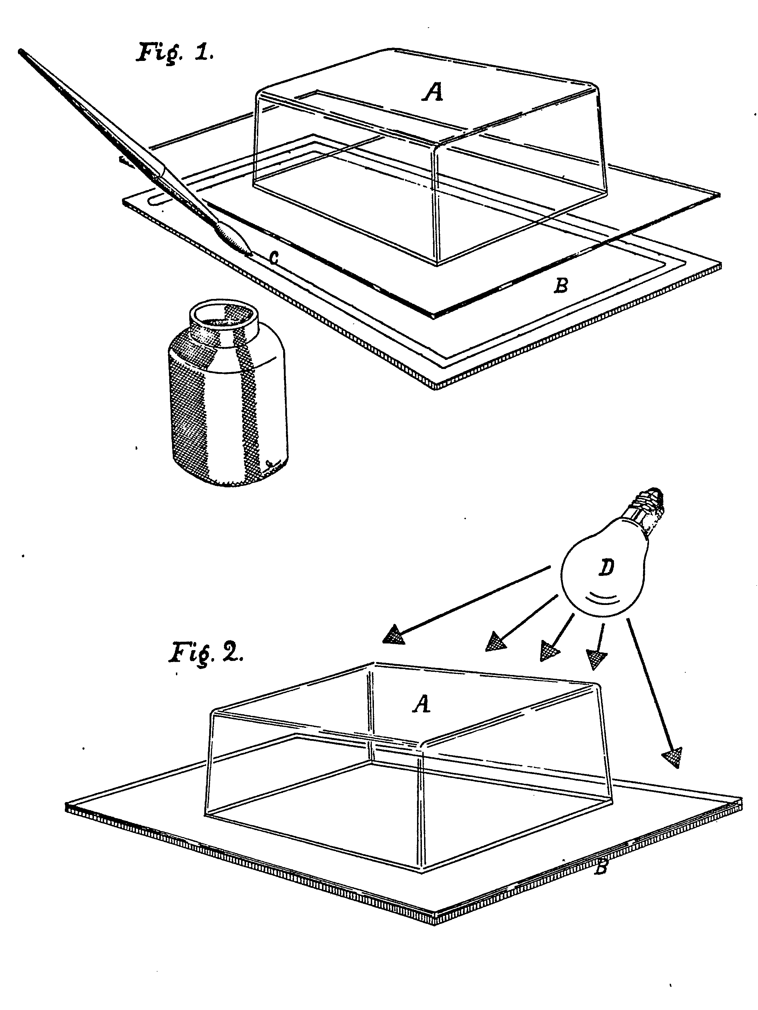

Figur 1   das Zuführen des Klebers C mittels eines Pinsels
          (schematisch dargestellt) auf die Verpackungskomponente B
          wobei der Blister A noch nicht ausgerichtet ist.

Figur 2   das Polymerisieren des Klebers mittels Ultraviolettstrahlung
          aus der Quelle D, wobei der Blister A mit der Verpackungskomponente B ausgerichtet und verbunden ist.

### Patentanspruch

Verfahren zur Verklebung einer Blisterverpackung, dadurch gekennzeichnet, dass ein Kleber auf den Blister oder die andere Verpackungskomponente zugeführt wird, dass die beiden Verpackungskomponenten miteinander verbunden werden und dass mittels Ultraviolett-Strahlung durch den Blister hindurch, die Polymerisation resp. die Verklebung ausgelöst wird.

Fig. 1.

A

B

C

Fig. 2.

D

A

B

Europäisches
Patentamt

**EUROPÄISCHER RECHERCHENBERICHT**

**0205408**
Nummer der Anmeldung

EP 86 81 0259

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl 4) |
|---|---|---|---|
| Y | CH-A- 560 594 (BATTELLE MEMORIAL) <br> * Spalte 1, Zeile 45 - Spalte 2, Zeile 48; Ansprüche 10,14 * <br><br> --- | 1 | B 65 B 11/50 <br> B 65 D 75/36 |
| Y | NL-A-6 502 090 (ARMOUR) <br> * Seite 4, Zeile 24 - Seite 35; Figuren 1,2 * <br><br> ----- | 1 | |

RECHERCHIERTE
SACHGEBIETE (Int. Cl 4)

B 65 B
B 65 D
B 32 B

Der vorliegende Recherchenbericht wurde für alle Patentansprüche erstellt.

| Recherchenort <br> DEN HAAG | Abschlußdatum der Recherche <br> 05-09-1986 | Prüfer <br> JAGUSIAK A.H.G. |
|---|---|---|